(19) Europäisches Patentamt

European Patent Office

Office européen des brevets

(11) Veröffentlichungsnummer: **0 419 690 B1**

(12) **EUROPÄISCHE PATENTSCHRIFT**

(45) Veröffentlichungstag der Patentschrift: **13.07.94**

(21) Anmeldenummer: **89117655.4**

(22) Anmeldetag: **25.09.89**

(51) Int. Cl.⁵: **H02J 3/26**, H02M 1/084, H02M 5/458

(54) **Verfahren und Vorrichtung zur Speisung eines Drehspannungsnetzes mit belastbarem Null-Leiter.**

(43) Veröffentlichungstag der Anmeldung:
**03.04.91 Patentblatt 91/14**

(45) Bekanntmachung des Hinweises auf die Patenterteilung:
**13.07.94 Patentblatt 94/28**

(84) Benannte Vertragsstaaten:
**AT CH DE FR GB IT LI NL**

(56) Entgegenhaltungen:
**EP-A- 0 208 088**

(73) Patentinhaber: **SIEMENS AKTIENGESELL-SCHAFT**
**Wittelsbacherplatz 2**
**D-80333 München(DE)**

(72) Erfinder: **Gaul, Hartmut, Dipl.-Ing.**
**Klebheimerstrasse 5**
**D-8551 Röttenbach(DE)**
Erfinder: **Müller, Albert, Dipl.-Ing.**
**Am Erlanger Weg 47c**
**D-8520 Erlangen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Speisung eines Drehspannungsnetzes mit belastbarem Null-Leiter sowie eine Vorrichtung hierzu. Anwendungsgebiet ist insbesondere die Spannungsversorgung von entlegenen Verbrauchern, die an kein öffentliches Versorgungsnetz angeschlossesn sind, von mobilen Bordnetzen in Fahrzeugen oder von einer gegen Ausfälle oder Spannungsschwankungen gesicherte Schiene für die Speisung störungsempfindlicher Geräte.

Aus der DE-A-32 36 071 ist die wahlweise synchrone Speisung eines Drehstromnetzes oder die unsynchronisierte Speisung eines isolierten Verbrauchernetzwerkes mittels eines Wechselrichters, insbesondere eines Pulswechselrichters bekannt, der einen Stelleingang für die Ausgangsspannungs-Amplitude und -Frequenz besitzt. Die Frequenzsteuergröße kann dabei von einem überlagerten Wirkstromregler und die Amplitudensteuergröße von einem überlagerten Blindstromregler geliefert werden. Die Steuerung des Wechselrichters über Frequenz und Amplitude geht von der Erzeugung eines symmetrischen und nullsystemfreien Systems von Wechselrichterausgangsspannungenaus und kann daher z.B. unsymmetrische Laststöße insbesondere dann nur schwer oder gar nicht ausregeln, wenn die Last unsymmetrisch zwischen den Phasenleitern und einem belastbaren Sternpunkt angeschlossen ist.

Für die Speisung eines Drehspannungsnetzes mit angeschlossenem Nullpunkt kann entsprechend der DE-A-30 12 232 jeder einzelne Phasenleiter des Drehspannungsnetzes von einer eigenen 4-pulsigen Brückenschaltung (B4-Wechselrichter) mit einer eigenen Regeleinrichtung gespeist werden, wobei die drei SpannungsSollwerte dieser Regeleinrichtungen als ein dreiphasiges symmetrisches System von Referenzvektoren vorgegeben werden. Jeder Wechselrichter ist an die Primärseite eines Einphasen-Transformators geschaltet, ohne daß hierbei ein angeschlossener Sternpunkt gebildet wird, während die Sekundärseiten an einem Ende zu einem belastbaren, an den Null-Leiter anschließbaren Sternpunkt zusammengeführt sind und an ihren anderen Enden an die Phasenleiter des Drehspannungsnetzes angeschlossen sind. Diese Transformationseinrichtung wird ergänzt durch ein aus Induktivitäten und Kondensatoren bestehendes Filter, das bevorzugt aus Längsdrosseln und Querkondensatoren besteht. Damit können Laststöße oder auch Oberschwingungsspannungen, die von Oberschwingungsströmen niedriger Ordnungszahl aufgrund nichtlinearer Lasten am Innenwiderstand der verwendeten Wechselrichteranordnung erzeugt werden, rasch ausgeregelt werden. Der Oberschwingungsgehalt insgesamt kann unter 5% gehalten werden. Dadurch kann ein beliebiges System aus drei Leiterspannungen bzw. drei Leiterströmen eingespeist werden, jedoch ist der Leistungsteil wegen der drei getrennten Brückenwechselrichter und der hierzu benötigte Regelteil verhältnismäßig aufwendig.

In der europäischen Patentanmeldung EP-A1-208 088 ist ein Verfahren vorgeschlagen, das sich zur Speisung des Drehspannungsnetzes einer 6-pulsigen Brückenschaltung bedient. Jeweils ein Brückenzweig-Paar aus zwei in Reihe liegenden Wechselrichterventilen ist mit ihrem Verhindungspunkt an einen Eingang der Transformationseinrichtung und mit ihren anderen Anschlüssen an eine vorgegebene Eingangsgleichspannung angeschlossen. Ein primärseitiger Sternpunkt der Transformationseinrichtung ist nicht vorhanden oder jedenfalls nicht an andere Teile der Anlage angeschlossen. Dadurch wird eine erhebliche Einsparung des Installationsaufwandes erreicht.

Bei diesem früheren Verfahren werden aus den drei Meßwerten der Leiterspannungen und aus drei symmetrischen, nullsystemfreien Spannungssollwerten mittels dreier eigener Spannungsregeleinrichtungen drei pulsbreitenmodulierte Einzelstellsignale für die Brückenzweigpaare gebildet. Im Regelkreis der Spannungsregeleinrichtungen wird eine der Struktur der Transformationseinrichtung entsprechende Umrechnung von sekundärseitigen Leiterspannungen auf primärseitige Spannungen vorgenommen.

Da aber der Wechselrichter nur ein nullsystemfreies System von Strömen und Spannungen zu liefern gestattet, bedeuten die drei getrennten Regeleinrichtungen eine Überbestimmung des Systems. Die drei Regler beeinflussen sich also gegenseitig und stören so das Regelverhalten. Sofern keine Proportionalregler verwendet werden, können sogar Instabilitäten auftreten.

Daher ist auch vorgeschlagen, nur zwei Spannungsregler zu verwenden, deren Sollwerte ein symmetrisches, nullpunktfreies System beschreiben, und mit nur zwei Spannungsistwerten zu vergleichen. Die pulsbreitenmodulierten Ausgangssignale der beiden Regler steuern zwei der drei Brückenzweigpaare. Das dritte Brückenzweigpaar wird von einem Signal gesteuert, das durch geeignete Addition der beiden anderen Steuersignale und Pulsbreitenmodulation gebildet wird.

Damit kann in einem passiven Netzwerk ein symmetrisches Spannungssystem trotz schnell veränderlichen und unsymmetrischen Lasten au frechterhalten werden. Die in das Netzwerk fließenden Ströme stellen sich dabei frei ein.

Wird aber das Drehspannungsnetz bereits von anderen Spannungs-quellen (z.B. ein Versorgungsnetz und/oder andere Wechselrichter) gespeist, so ist häufig erwünscht, die Aufteilung der in das Netzwerk fließenden Ströme zu steuern oder zu regeln.

Der Erfindung liegt daher die Aufgabe zugrunde, mit geringem Aufwand in einem Drehspannungsnetz mit belastbarem Null-Leiter ein symmetrisches Spannungssystem aufrechtzuerhalten, selbst wenn das Drehspannungsnetz parallel auch von einer anderen Spannungsquelle gespeist ist.

Die Erfindung sieht zur Lösung dieser Aufgabe ein Verfahren mit einer Synchronisierung vor, das im Anspruch 1 angegeben ist. Dieses Verfahren kann mit einer überlagerten Stromregelung betrieben werden. Ein entsprechendes Verfahren ist im Anspruch 10 angegeben. Eine Vorrichtung hierzu enthält die Merkmale des Anspruchs 16. Vorteilhafte Weiterbildungen der Erfindung sind in den Unteransprüchen gekennzeichnet.

Anhand von einem Ausführungsbeispiel und 6 Figuren wird die Erfindung näher erläutert. Es Zeigt:

FIG 1     ein Beispiel für den Leistungteil der Vorrichtung,

FIG 2     einen bevorzugten Anwendungsfall der Erfindung,

FIG 3     das Prinzip der Erfindung,

FIG 4     eine bevorzugte Regelung und Wechselrichtersteuerung für die Erfindung,

FIG 5     die Pulsbreitenmodulation einer Einzelsteuergröße,

FIG 6     einen bevorzugten Regelteil für die Erfindung.

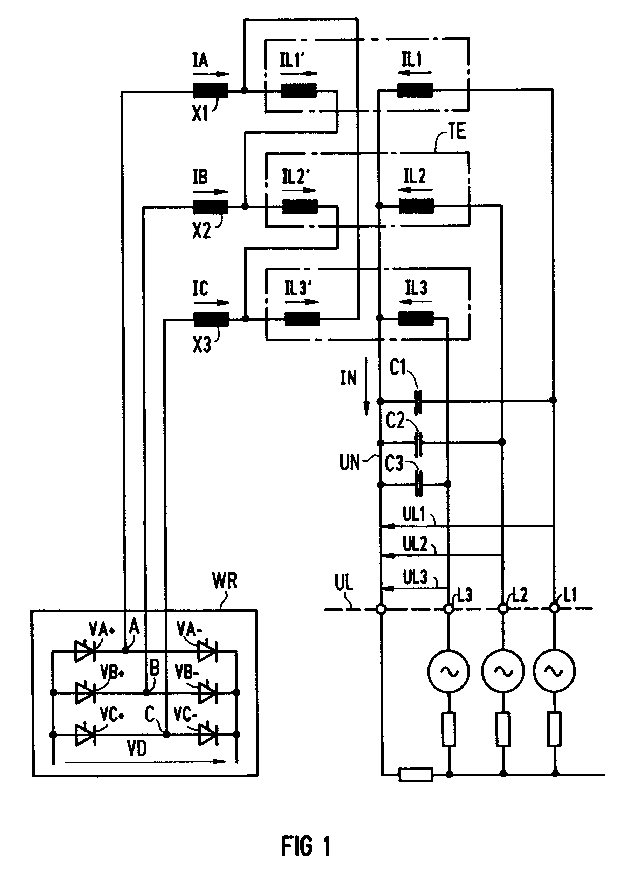

In FIG 1 ist eine Spannungsquelle VD am Gleichspannungseingang eines Wechselrichters WR dargestellt. Mit UL1, UL2, UL3 sind die Phasenspannungen des Drehspannungsnetzes gegen den Null-Leiter UN bezeichnet. Diese Phasenspannungen können in beliebiger Kombination mit aktiven oder passiven Lasten belastet sein, stellen also ein unsymmetrisches, nullsystembehaftetes System dar. Dies gilt auch für die entsprechenden Phasenströme IL1, IL2, IL3 und den in den Sternpunkt fließenden Strom IN = IL1 + IL2 + IL3.

Die Phasenströme werden der Sekundärseite der Transformationseinrichtung TE entnommen, die im vorliegenden Fall Einphasentransformatoren mit Sternschaltung der Sekundärwicklungen und mit einem an den Null-Leiter UN angeschlossenen Sternpunkt enthält. Die Primärwicklungen der Transformatoren sind im Dreieck geschaltet. Ferner sind Filterdrosseln X1, X2, X3 und Filterkondensatoren C1, C2, C3 vorhanden, deren Anordnung im Prinzip beliebig ist. So können z.B. die Kondensatoren auch im Dreieck geschaltet und/oder primärseitig angeschlossen und/oder die Drosseln sekundärseitig angeordnet sein. Für die Erfindung haben sie die Rolle eines mit dem eigentlichen Transformator in Reihe geschalteten Filters, insbesondere eines Tiefpaßfilters.

Auch der Transformator selbst kann z.B. primärseitig anstelle einer Dreieckschaltung eine Sternschaltung aufweisen, sofern deren Nullpunkt nicht belastet ist. Ist keine galvanische Potentialtrennung erforderlich, so kann auch ein herkömmlicher Sternpunktbildner verwendet werden. Von der Struktur der Transformationseinrichtung hängen allerdings die im folgenden verwendeten Umrechnungen ab, für die daher bei einer anderen Schaltung auch andere, dem Fachmann geläufige Umrechnungen gelten.

Die in Reihe liegenden Wechselrichterventile VA+ und VA-, die mit ihrem Verbinoungspunkt A an die Filterdrossel X1 am Eingang der Transformationseinrichtung TE angeschlossen sind und im Sinne eines pulsbreitenmodulierten Wechselrichterbetriebes mittels des Einzelsteuersignals UA* gezündet werden, stellen ein an die Eingangsgleichspannung VD angeschlossenes Brückenzweig-Paar dar. Die Einzelsteuerspannungen UB* und UC* steuern die beiden weiteren BrückenzweigPaare des Wechselrichters WR, die an die Filterdrosseln X2 und X3 an den entsprechenden Eingängen der Transformationseinrichtung TE angeschlossen sind. Mit IA, IB und IC sind die Ströme und Spannungsabfälle an den Filterdrosseln bezeichnet.

Die sekundärseitigen Spannungen sind an die Klemmen L1, L2 und L3 und den Null-Leiter UN des mit einer beliebig verteilten Last beschalteten Drehspannungsnetzes angeschlossen. Das System der sekundärseitigen Spannungen ist mit UL bezeichnet.

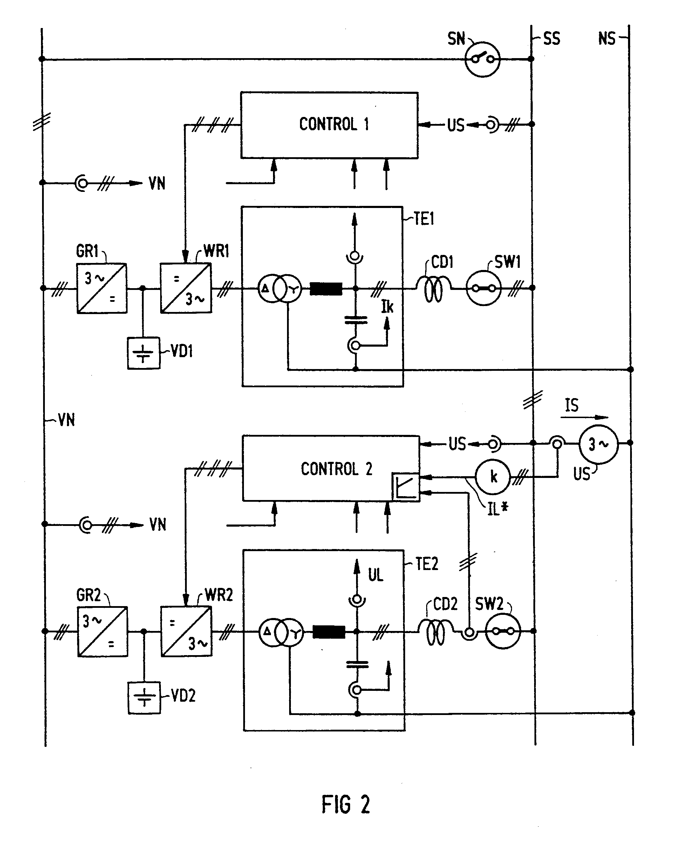

Bei dem bevorzugten Anwendungsfall der FIG 2 stellt SS die sichere Schiene eines beliebige (ggf. auch aktive) Elemente enthaltenden Verbrauchernetzwerkes und NS dessen Null-Leiter dar. Die in die sichere Schiene einzuspeisende Energie wird einem Versorgungsnetz VN entnommen, dessen galvanische Verbindung zur sicheren Schiene bei einer Störung im VN und u.U. auch im Normalfall von einem Netzschalter SN getrennt ist. Der Netzschalter SN dient z .B. dazu, bei Kurzschlüssen an der sicheren Schiene einen erhöhten Strom zum Ausschlagen von Sicherungen an den Wechselrichtern vorbei zu leiten.

Im ungestörten Normalfall wird der Energiefluß über Gleichrichter GR1, GR2 (und ggf. weitere Gleichrichter) zum Laden von Batterien oder anderen Speichereinrichtungen für die Gleichspannungen VD1, VD2 benutzt. Diese sind über die Wechselrichter WR1, WR2 und die Transformationseinrichtungen TE1 und TE2 sowie ggf. weitere Koppelinduktivitäten CD1, CD2 und Wechselrichterschalter SW1 und SW2 an die sichere Schiene SS angeschlossen. Da für die Synchronisierung von WR1 Meßwerte der Spannungen des Versorgungsnetzes VN, für die Synchronisierung von WR2 Meßwerte der Spannungen an der sicheren Schiene bzw. am daran angeschlossenen Wechselrichter WR1 und gegebenenfalls für Stromregler auch Strommeßwerte (z.B. der Ausgangsströme IL sowie der über die Kondensatoren fließenden Kondensatorströme IK) benötigt werden, sind auch verschiedene Meßglieder in FIG 2 dargestellt.

Ist das Versorgungsnetz störungsfrei, so kann durch Synchronisierung von WR1 sichergestellt werden, daß WR1 bei Netzstörung jederzeit Leistung abgeben kann. Bei geöffnetem Schalter SN dient die Synchronisierung von WR1 dazu, die Spannung US der Versorgungsspannung VN so nachzuführen, daß der Schalter SN ohne Unstetigkeiten in US wieder geschlossen werden kann.

Die Zündimpulse für die Wechselrichter werden von Regel- und Steuerteilen "control 1" und control 2" geliefert, die gemäß der Erfindung praktisch gleich aufgebaut sind. Dem Wechselrichter WR1 ist dabei die Aufgabe zugeteilt, bei geöffnetem Schalter SN auf der sicheren Schiene SS ein durch Sollwerte vorgegebenes Drehspannungsnetz US aufzubauen, das im allgemeinen entsprechend den (beliebigen und unbekannten) Bedingungen der angeschlossenen Last zunächst unsymmetrisch und mit einem Nullsystem behaftet sein kann und daher drei Freiheitsgrade besitzt. Die dann über den Wechselrichter WR1 ins Drehspannungsnetz eingespeisten Ströme stellen sich der Last entsprechend frei ein und für "control 1" ist keine Stromregelung vorgesehen.

Dem Wechselrichter WR2 hingegen ist die Aufgabe zugeteilt, einen bestimmten Bruchteil k der zur Aufrechterhaltung des Spannungssystems US im Lastnetz benötigten Ströme zu liefern. Dieser Bruchteil der Lastströme ist als System IL* der Stromsollwerte bezeichnet und wird zusammen mit dem Istwertsystem IL der Ströme am Ausgang der Transformationseinrichtung TE2 einer überlagerten Stromregelung im Bauteil "control 2" zugeführt.

Für die Regelungen muß beachtet werden, daß nicht nur das Stromsystem IL, sondern auch das Istwertsystem UL ein Nullsystem

$$UL1 + UL2 + UL3 = 3 . UO$$

besitzt, in die Primärwicklungen der Transformatoren aber vom Wechselrichter derartige Nullsysteme nicht eingespeist werden können. Faßt man die Induktivitäten der Filterdrosseln und der Einzeltransformatoren zu induktiven Widerständen XA, XB, XC zusammen, so kann man aufgrund der transformatorischen Kopplung (Übersetzungsverhältnis k angenommen) für die Primärwicklungen also Ersatzspannungen UL12' , UL23' und UL31' ansetzen:

$$k . UL12' = UL1$$
$$k . UL23' = UL2$$

$$k . UL31' = UL3$$

Dabei ist ein primärseitiges Nullsystem $U_0'$ vernachlässigt, das von einem dem sekundärseitigen Stromnullsystem entsprechenden Kreisstrom in der Transformationsschaltung hervorgerufen wird und zu allen verketteten Ersatzistwerten hinzutritt.

Gibt man für diese fiktiven Spannungen, die als Ersatzistwerte auf der Primärseite dienen können, z.B. symmetrische Sollwerte ohne Nullsystem (UL12*, UL23*, UL31*) vor, so wird dadurch die Unsymmetrie des sekundären Spannungssystems korrigiert. Die dann in die unsymmetrische Last fließenden Ströme müssen und können vom Wechselrichter aufgebracht werden und bewirken entsprechende stromabhängige Spannungsabfälle XA . IA, XB . IB und XC . IC.

Um z.B. gemäß UL1 = UL12*, UL2 = UL23*, UL3 = UL31* die Symmetrie von UL zu erzwingen, steuert eine mit den Regelabweichungen des Systems UL gespeiste Spannungsregeleinrichtung den Wechselrichter auf das verkettete Spannungssystem

$$UAB^* = XA . IA + UL12^* - XB . IB$$
$$UBC^* = XB . IB + UL23^* - XC . IC$$
$$UCA^* = XC . IC + UL31^* - XA . IA$$

Nach der üblichen Umrechnung kann aus den verketteten Ersatzistwerten auch ein System von Ersatzistwerten gebildet werden, das an fiktiven Eingängen L1' , L2' , L3' induktionslos gedachter, fiktiver Einzeltransformatoren (z.B. mit k = 1) auftritt:

$$UL1' = (UL12'-UL31')/3 = (UL1-UL3)/3$$
$$UL2' = (UL23'-UL12')/3 = (UL2-UL1)/3$$
$$UL3' = (UL31'-UL23')/3 = (UL3-UL2)/3.$$

Eine derartige Umrechnung ist das Inverse der Beziehungen

$$UL12' = UL1' - UL2'$$
$$UL23' = UL2' - UL3'$$
$$UL31' = UL3' - UL1'.$$

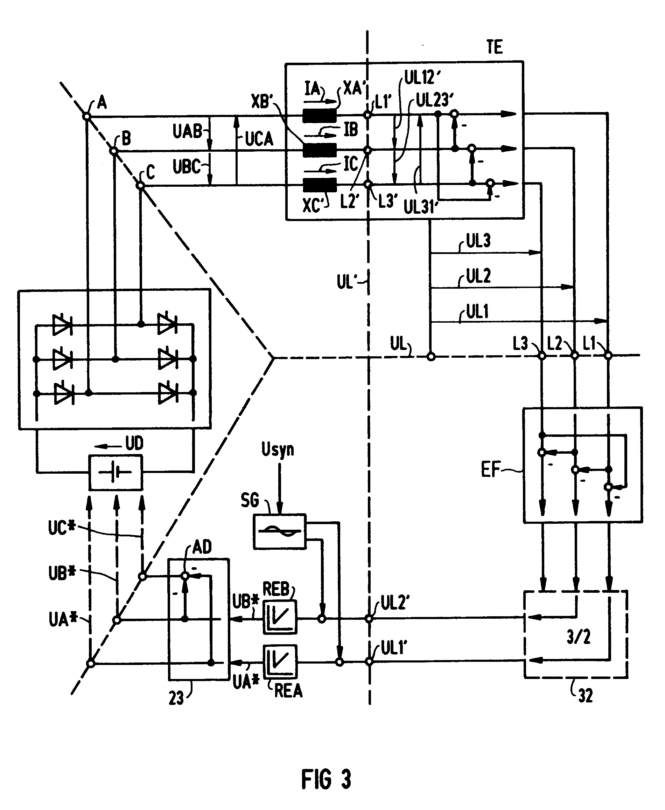

Der obere Teil der FIG 3 zeigt ein Ersatzschaltbild der FIG 1, wobei die Transformationseinrichtung TE durch Impedanzen und den fiktiven Transformatoren entsprechende Rechenelemente dargestellt ist.

Der untere Teil zeigt, wie in der Umrichterregelung durch ein Entflechtungsglied EF die Umrechnung des Istwertsystems UL in die Ersatzwerte UL1', UL2' und UL3' für die Primärseite vorgenommen wird, die mit Sollwerten aus einem Sollwertgeber SG verglichen werden.

Der Sollwertgeber ist auf ein synchronisierendes Spannungssystem Usyn (im Fall des Wechselrichters WR1 auf die Versorgungsspannung und im Fall des Wechselrichters WR2 auf die Ausgangsspannung des Wechselrichters WR1 oder dessen Sollwertsystem oder auch auf das vom Wechselrichter WR1 bereits aufgebaute Drehspannungssystem US) synchronisiert. Er liefert bei vorgegebener Sollamplitude |Usyn| und Frequenz f* bzw. Phasenlage f*.t das synchronisierte Spannungssystem

$$|Usyn| \cdot \cos(f^*.t)$$
$$|Usyn| \cdot \cos(f^*.t + 2\pi/3)$$
$$|Usyn| \cdot \cos(f^*.t + 4\pi/3),$$

Im vorliegenden Fall ist mit dem Symbol "3/2" angedeutet, daß vom Entflechtungsglied der Ersatzistwert UL3' unterdrückt wird. Eine dritte, durch (-UL1' -UL2' ) bestimmbare Spannung würde ein nullpunktfreies System liefern, das aber allein durch UL1' und UL2' beschreibbar ist.

Diese 3/2-Wandlung zur Unterdrückung des Nullsystems wird am Steuereingang des Wechselrichters durch einen "2/3-Wandler" (Element 23) wieder rückgängig gemacht, der das Einzelsteuersignal UC* für das auf die Ausgangsspannung UC arbeitende Brückenzweigpaar aus den entsprechenden anderen Einzelsteuersignalen UA* und UB* gemäß UG* = -UA* -UB* bildet. Dabei sind UA* und UB* an Spannungsregeleinrichtungen REA und REB für die Regelabweichungen UL1* -UL1' und UL2* -UL2' abgegriffen.

Die Spannungsregeleinrichtung kann daher für jeden Ersatzistwert einen eigenen Regler enthalten, da aber der Wechselrichter zwar unsymmetrische Systeme, aber keine Nullsysteme von Strom und Spannung bereitstellen kann, kommt man durch entsprechende 2/3- und 3/2-Wandler auf beiden Seiten bereits mit zwei Reglern für zwei entsprechend synchronisierte Regler aus.

Im folgenden werden insbesondere symmetrische Sollspannungen mit der Amplitude U* und der Frequenz f* durch ortlogonale Sollspannungen

$$U^*\alpha = U^* \cdot \cos (f^* \cdot t);$$
$$U^*\beta = U^* \cos (f^* t + \pi/2)$$

vorgegeben, denen entsprechende Spannungen $U_R$, $U_S$, $U_T$, die von einem Nullsystem befreit sind, durch "$\alpha\beta$/RST-Wandler" bzw. "RST/$\alpha\beta$ -Wandler" zugeordnet werden können. Es handelt sich hierbei um Rechenelemente, die z.B. für drehzahlgeregelte Drehstrommaschinen bereits üblich sind.

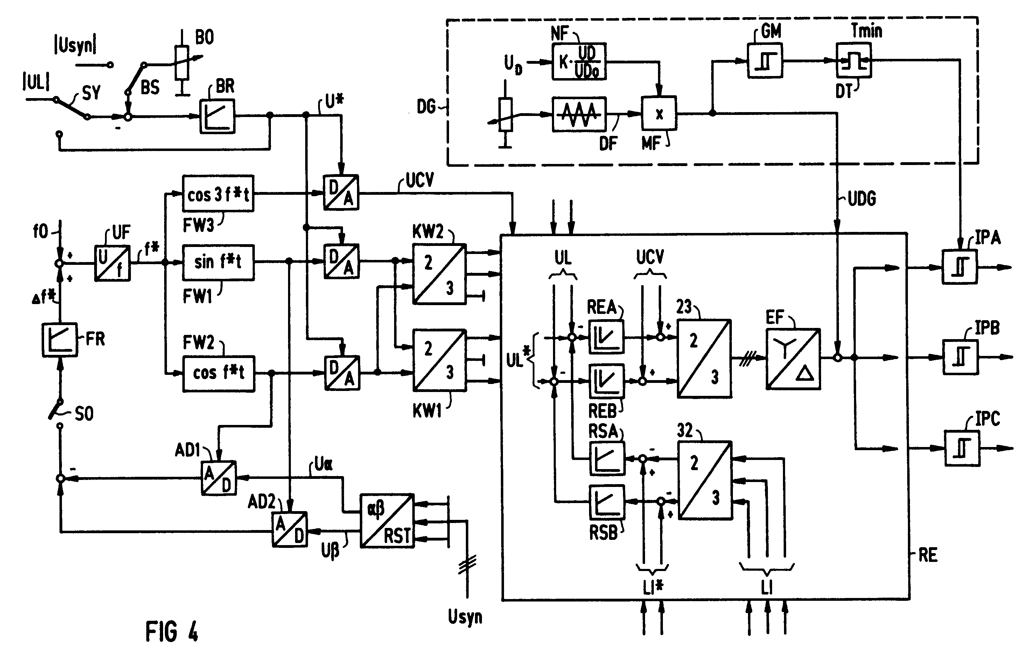

In der Baugruppe RE der FIG 4 ist das Entflechtungsglied EF im Stellgrößenkanal der Spannungsregeleinrichtungen angeordnet. Den Ausgangsgrößen der Spannungsregeleinrichtungen ist eine Oberschwingung dritter Ordnung zur Annäherung an eine Trapezform überlagert, wie dies in der erwähnten EP-A1-208 088 beschrieben ist. Dazu sind vor der 2/3-Wandlung entsprechende, aus den Sollwerten der Spannungsregeleinrichtung gebildeten Spannungen UCV addiert.

Das Istwertsystem UL ist im Fall des Wechselrichters WR2 am Reglereingang mit der Summe je eines vom Sollwertgeber gelieferten Spannungssollwertes und eines Zusatzsollwertes verglichen. Diese Zusatzsollwerte sind an überlagerten Stromreglern abgegriffen, deren Istwerte ein nullsystemfreies System LI darstellen und mit entsprechenden Sollwerten LI* verglichen werden. Auch hierbei ist vorgesehen, das Sollspannungssystem UL* und das Sollstromsystem LI* nur jeweils durch zwei Signale vorzugeben, so daß auch nur zwei Spannungsregeleinrichtungen REA, REB und zwei Stromregeleinrichtungen RSA, RSB zusammen mit entsprechenden Wandlern 23 und 32 vorgesehen sind.

Die Einzelsteuersignale UA*, UB*, UC* werden in Impulsbildner IPA, IPB, IPC mittels einer von einem Tastspannungsgenerator DG gelieferten Tastspannung, insbesondere einer Dreieckspannung UDG pulsbreitenmoduliert. Z.B. wird im Impulsbildner IPA ein Steuerimpuls UA*+ aus der Differenz UA*-UDG gebildet, solange UA* größer als UDG ist und das Ventil VA+ angesteuert werden soll. Ist UA* kleiner als UDG, so wird mit dem Signal UA*- das Ventil VA+ gesperrt. Vorteilhaft wird über die pulsbreitenmodulierten Signale sichergestellt, daß in jeder Taktperiode des Modulationstaktes jedes Ventil mindestens für eine Dauer, deren Mindestzeit Tmin vorgegeben ist, gezündet ist.

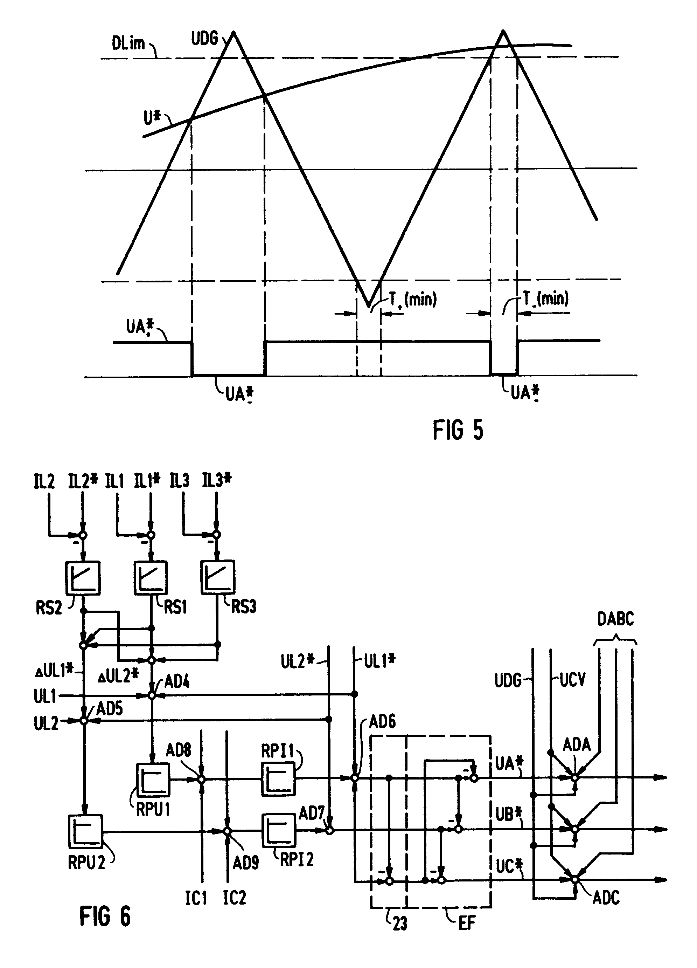

In FIG 5 ergibt sich für den Verlauf des Einzelsteuersignals UA* zunächst ein Zündimpuls UA*-ausreichender Länge. Für UA* > DLim würde sich aus der Differenz UA* - UDG jedoch eine unter Tmin liegende Zünddauer ergeben. Für Wechselrichterschaltungen mit kleinem Innenwiderstand bedeutet dies einen hohen Dauerstrom in diesem Ventil. Unter Umständen kann sich aus der Pulsbreitenmodulation sogar ergeben, daß das Ventil VA- während mehrerer Modulationstakte überhaupt nicht stromlos würde.

Ein Grenzwertmelder GM leitet daher für den oberen Umkehrpunkt (z.B. aus UDG ≥ DLim und/oder durch ein frequenzunabhängiges Zeitglied DT) ein Signal ab, das für diese Mindestdauer T-(min) durch Verknüpfung im Impulsbildner IPA einen entsprechenden Zündimpuls UA*- entsprechender Mindestlänge sicherstellt. Für das Ventil VA-, das mit dem Signal UA* angesteuert wird, sind Mindestzeiten T+min vorgesehen.

Das Spannungsverhältnis zwischen dem Einzelsteuersignal UA*, das von der Regelung gebildet wird, und der Amplitude der Tastspannung UDG bestimmt die Größe der Ausgangsspannung UA im Verhältnis zur Eingangsgleichspannung UD. Sinkt caher z.B. bei längerem Batteriebetrieb des Wechselrichters die Eingangsgleichspannung UD, so entsteht dadurch eine Spannungsabweichung, die der Regler ausregeln muß.

Damit diese Spannungsabweichung so gering wie möglich gehalten werden kann und stets die gleiche Proportionalität zwischen dem Einzelsteuersignal UA* und dem entsprechenden Istwert der Ausgangsspannung herrscht, werden die Einzelsteuersignale mit einer Dreieckspannung pulsbreitenmoduliert, deren Amplitude in Abhängigkeit von der Eingangsgleichspannung vorgegeben wird. Z.B. kann an einem Potentiometer Frequenz und Amplitude einer Dreieckspannung DF eingestellt werden, während ein Nachführglied NF den Faktor eines Multiplikationsgliedes MF derart vorgibt, daß entsprechend der Abweichung der tatsächlichen Eingangsgleichspannung UD von einem Nennwert UDo der Proportionalitätsfaktor bis auf eine Konstante K dem Quotienten UD/UDo gleich ist.

In FIG 4 ist ferner der bevorzugte Aufbau einer Synchronisiereinrichtung zur Verarbeitung der Synchronisierspannung Usyn im Sollwertgeber SG dargestellt. Die Synchronisiereinrichtung soll den in Fig. 2 auftretenden Betriebs fällen gerecht werden können. Soll z.B. bei geöffnetem Schalter SN (d.h. Inselbetrieb in FIG 2) nur über den Wechselrichter WR1 eine passive Last gespeist werden, so ist meist keine Synchronisierung erforderlich.

Es genügt dann, einen Frequenzsollwert fO vorzugeben, der von einem Spannungsfrequenzumsetzer UF in eine Frequenzsteuerspannung f* umgesetzt wird, mit der entsprechende Winkelfunktionsgeber FW1, FW2 zur Erzeugung der Funktionen $\sin(\int f^*.dt)$, $\cos(\int f^*.dt)$ gesteuert werden. Dadurch werden zwei Orthogonalkomponenten eines Drehspannungssystems mit der Umlauffrequenz fO erzeugt, denen in multiplizierenden Digital/Analog-Umsetzern ein gewünschter Sollwertbetrag aufgeprägt wird.

Dieser Sollwertbetrag ist im dargestellten Fall am Ausgang eines Betragsreglers BR abgegriffen, dessen Sollwert über einen Betragsumschalter BS an einem Potentiometer BO konstant vorgegeben ist. Der Istwerteingang ist dabei mit dem Betrag |UL| des Spannungsistwertsystems beaufschlagt. Der Wechselrichter erzeugt dann auch bei unsymmetrischer Last an der sicheren Schiene SS ein Spannungssystem des Betrages BO und der durch $f_o$ vorgegebenen Frequenz.

Tritt im Verbrauchernetzwerk oder im Wechselrichter eine Störung auf, die zu einem Absinken der Spannung der sicheren Schiene führt, so soll durch Schließen des Netzschalters SN das Versorgungsnetz VN die Spannungseinspeisung übernehmen können. Um auch für diesen Notfall bereitzustehen, kann das Sollwertsystem UL* für den Baustein RE auf die Versorgungsspannung VN bereits im Normalfall synchronisiert werden.

Zu diesem Zweck kann die Synchronisierspannung Usyn z.B. aus dem Spannungssystem an den Phasen RST des Spannungssystems VN ermittelt werden. Daraus bildet ein RST/$\alpha\beta$ -Wandler ein nullsystemfreies System, dessen Orthogonalspannungen $U\alpha = |Usyn|.\cos\alpha$, $U\beta = |Usyn|.\sin\alpha$ einen Phasenwinkel-Sollwert $\alpha$ für das System UL an der sicheren Schiene vorgeben. Multiplizierende Analog/Digital-Umsetzer AD1 und AD2, die von den Funktionsgebern FW1 und FW2 gesteuert sind, bilden daraus die Größe

$$|Usyn|.\sin \alpha.\cos (\int f^*.dt)-|Usyn|.\cos \alpha.\sin(\int f^*.dt) = |Usyn|.\sin( \alpha - \int f^*.dt),$$

d.h. die Projektion der Synchronisierspannung auf das normierte Sollwertsystem. Dadurch ist ein Maß für die Phasenabweichung $(\alpha - \int f^*.dt)$ zwischen der Synchronisierspannung und der Sollspannung gebildet.

Diese Phasenabweichung kann mittels des Frequenzreglers FR in eine Frequenzsteuer-Zusatzgröße $\Delta f^*$ umgesetzt werden, mit der der vorgegebene Frequenzsollwert fO am Eingang des Umsetzers UF korrigiert wird. Für den Fall, daß die Versorgungsspannung VN ausfällt oder grundsätzlich nicht synchronisiert werden soll, kann der Winkelregler FR über einen entsprechenden Schalter SS gesperrt werden. In der Synchronisierspannung enthaltene Oberschwingungen und Unsymmetrien werden dadurch ohne Phasenverschiebung ausgefiltert.

Außerdem kann die Synchronisierspannung auch aus dem Spannungssystem US der sicheren Schiene gebildet werden, um den Wechselrichter auf diese Spannung zu synchronisieren, ohne daß Instabilitäten au ftreten.

Dabei kann es vorteilhaft sein, den Betragsregler BR dem Betrag |Usyn| der Synchronisierspannung oder dem fest vorgegebenen Sollwert BO nachzuführen. Während durch die Stellung des Betragsumschalters BS der Sollwert ausgewählt wird, wird durch die Stellung des Schalters SY praktisch zwischen einer Regelung und einer Steuerung der synchronisierten Sollspannung ausgewählt. Im Fall der Steuerung ist dem Istwertkanal des Betragsreglers BR das Reglerausgangssignal selbst zugeführt. Eine derartige Betragsregelung kann auch gesperrt werden, falls den Spannungsregeleinrichtungen des Regelbausteins RE entsprechende Stromregler überlagert sind, wie dies dem Betrieb des Wechselrichters WR2 in FIG 2 bei arbeitendem Wechselrichter WR1 (Wechselrichterparallelbetrieb) bzw. bei geschlossenem Schalter SN (Netzparallelbetrieb) entspricht.

Zu FIG 4 ist ferner zu bemerken, daß zur Erhöhung der Spannungsausnutzung vorteilhaft ein weiterer, vom Spannungsfrequenz-Umsetzer UF gesteuerter Funktionsgeber FW3 die Funktion cos-($\int 3f^*dt$) für einen entsprechenden multiplizierenden Digital/Analog-Umsetzer liefert. Dessen Ausgangssignal beschreibt ein symmetrisches, nullsystemfreies Sollspannungssystem der dritten Harmonischen, das als entsprechende Spannung UCV den Ausgangssignalen der Spannungsregeleinrichtung REA und REB überlagert wird.

Bisher dienen die digitalisierten Ausgangssignale der Funktionsgeber FW1 und FW2 nur dazu, die Orthogonalkomponenten des Sollspannungssystems UL* für die sekundärseitigen Ausgangsspannungen festzulegen, und sind einen $\alpha\beta$/RST-Wandler KW1 zugeführt, falls der Regelbaustein RE mit RST-Systemen arbeitet. Sie können aber mittels des Wandlers KW2 auch ein Komponentenpaar liefern, das ein um 90° verschobenen Sollwertsystems für die über die Kondensatoren der Filtereinrichtungen fließenden Filterströme bildet. Diese Filterstrom-Sollwerte werden bei dem Regelbaustein RE nach FIG 6 benötigt.

Die Spannungsregelung der Fig. 6 benutzt für die Pulsbreitenmodulation Additionsglieder ADA, ADB und ADC, denen jeweils die Tastspannung UDG und eine der Ausgangsspannungen des Entflechtungsglieoes EF zugeführt ist. Ferner wird hierbei auch die Addition mit der der dritten Harmonischen entsprechenden Spannung UCV vorgenommen.

Mit DABC sind Gleichanteil-Ausgleichsspannungen bezeichnet. Diese können jeweils am Ausgang eines nicht dargestellten Nullpunktreglers für die geglättete Ausgangsspannung der Brückenzweig-Paare entnommen werden, um in den Ausgangs-Wechselrichterspannungenmöglicherweise enthaltene Gleichspannungsanteile auf den Wert Null auszuregeln.

Entsprechend der in FIG 3 angegebenen Struktur der Transformationseinrichtung TE stellen also die Eingangssignale des Entflechtungsgliedes EF - bis auf eine auch das Übersetzungsverhältnis berücksichtigende Verstärkung - Stellsignale für nullsystemfreie Ersatz-Spannungen dar. Diese sind aus den sekundärseitigen Spannungen auf die fiktiven Ausgänge L1', L2', L3' der hypothetischen Impedanzen XA', XB', XC' rückgerechnet.

Der Wechselrichter kann daher durch einen Regelvergleich der Istwerte UL1 und UL2 mit den Sollwerten UL1* und UL2* ausgeregelt werden. Dabei wird ausgenutzt, daß die Spannungsregler ein System von Steuersignalen abgeben sollen, die kein Nullsystem besitzen, also die negative Summe zweier Reglerausgangssignale ein drittes Steuersignal ergibt, für dessen Bildung kein eigener Regler erforderlich ist.

Die Regeldifferenzen werden in FIG 6 an Additionsstellen AD4 und AD5 am Eingang der jeweiligen Spannungsregeleinrichtungen gebildet.

Vorteilhaft sind mittels Additionsstellen AD6 und AD7 am Ausgang dieser Regeleinrichtungen zur Beschleunigung der Regelung Vorsteuerspannungen aufgeschaltet, die aus den Spannungssollwerten selbst abgeleitet sind.

Für die Dimensionierung der Spannungsregeleinrichtungen ergibt sich vorteilhaft ein PID-Regelverhalten. Der differenzierende Anteil wird dabei bevorzugt dadurch erhalten, daß die Spannungsdifferenz UL1*-UL1 bzw. UL2*-UL2 einem überlagerten Proportional- oder Proportional/Integral-Regler RPU1 bzw. RPU2 aufgeschaltet ist. Dessen Ausgangssignal ist als Sollwert für einen Kondensatorstrom mit einem an den Kondensatoren abgegriffenen Stromistwert verglichen und einem unterlagerten Stromregler, vorzugsweise einem Proportionalregler RPI1 bzw. RPI2 zugeführt. Jeder einem Stromregler über-lagerte Regler, d.h. hier der Proportionalregler RPU1 bzw. RPU2, ist vorteilhaft mit einer aus seinem Sollwert gebildeten, um 90° phasenverschobenen Vorsteuergröße vorgesteuert. Diese Vorsteuergröße IC1* bzw. IC2* ist dem Reglerausgang aufgeschaltet (Additionsstellen AD8 und AD9) und am bereits erläuterten Koordinatenwandler KW2 (FIG 4) abgegriffen.

Für die Spannungsregelung in "control 1" (FIG 2) sind die Stromregeleinrichtungen der RSA, RSB der FIG 4 nicht erforderlich. Der sich daraus ergebende Aufbau des Regelbausteines RB ist somit bereits beschrieben und entspricht der aus EP-A-208 088 bekannten Vorrichtung, die durch die in FIG 4 beschriebenen Elemente zur Synchronisierung sowie zur Verbesserung der Pulsmodulation ergänzt ist.

Für "control 2" (FIG 2) ist eine Stromregelung vorgesehen, die im Prinzip auch ohne die bisher beschriebene, synchronisierte Spannungsregelung arbeitet.

Für die Ströme durch die Filter-Drosseln nach FIG 1 gilt nämlich:

IA = IL1' - IL3'
IB = IL2' - IL1'
IC = IL3' - IL2'

In diesen Drosseln treten die Spannungsabfälle auf:

UAA' = $L1(\frac{d}{dt} IL1' - \frac{d}{dt} IL3')$
UBB' = $L2(\frac{d}{dt} IL2' - \frac{d}{dt} IL1')$
UCC' = $L3(\frac{d}{dt} IL3' - \frac{d}{dt} IL1')$

Für die verketteten Spannungen am Wechselrichterausgang ergibt sich, falls die Impedanzen L1, L2, L3 der Filterdrosseln gleich sind:

$$UAB = UL1' + UAA'-UBB' = UL1' + 2L \cdot \tfrac{d}{dt} \, IL1'-L \cdot \tfrac{d}{dt} \, IL2'-L \cdot \tfrac{d}{dt} \, IL3'$$

$$UBC = UL2'UBB'-UBC'-UL2' + 2L \cdot \tfrac{d}{dt} \, IL2'-L \cdot \tfrac{d}{dt} \, IL3'-L \cdot \tfrac{d}{dt} \, IL1'$$

$$UCA = -UAB-UBC$$

Man kann dabei prinzipiell auch schreiben:

$$UAB = UL1' + 3L \cdot \tfrac{d}{dt} \, IL1'-L \tfrac{d}{dt} \, (IL1' + IL2' + IL3')$$

$$UBC = UL2' + 3L \cdot \tfrac{d}{dt} \, IL2' -L \tfrac{d}{dt} \, (IL1' + IL2' + IL3'),$$

oder, wenn die durch die Ströme IL1, IL2, IL3 hervorgerufenen sekundärseitigen Spannungsabfälle mit $\Delta U(IL1)$, $\Delta U(IL2)$ und $\Delta U(IL3)$ bezeichnet werden:

$$UAB = UL1' + 3\Delta \, U(IL1)$$

$$UBC = UL2' + 3\Delta \, U(IL2),$$

wobei wieder Nullsysteme, die am Wechselrichter nicht auftreten, vernachlässigt sind.

Prinzipiell brauchen also die beiden Stromregler RSA und RSB der FIG 4 nur die entsprechenden Steuersignale UA*, UE* und UC* = -UA* -UB* des Wechselrichters zu bilden, wobei die Struktur der Transformationseinrichtung im Regelkreis dieser Stromregler an geeigneter Stelle (z.B. im Stellgrößenkanal durch die Entflechtungseinrichtung EF nach FIG 4 oder 6) berücksichtigt werden muß. Vorteilhaft für eine stabile und sonnelle Stromregelung ist jedoch, die für jede Phase einen eigenen Stromregler mit nachgeschalteter Unterdrückung eines Nullsystems durch 3/2-Wandlung und/oder eine Spannungsvorsteuerung zu verwenden.

Während im unbelasteten Fall (IL1 = IL2 = IL3 = 0) und vernachlässigten Kondensatorströmen die verketteten Ausgangsspannungen UAB, UBC und UCA der Brückenzweig-Paare gleich den Spannungen UL1' , UL2' und UL3' sind, gilt im allgemeinen Fall nach FIG 3:

$$UAB = UL1' + X \cdot IA - X \cdot IB$$

$$UBC = UL2' + X \cdot IB - X \cdot IC$$

$$UCA = UL3' + X \cdot IC - X \cdot IA.$$

Durch eine Spannungsvorsteuerung können also zunächst aus den Sollwerten oder Istwerten der Spannungssysteme UL oder UL' unter entsprechende Entflechung die Wechselrichter-Steuersignale vorgegeben werden, bei denen am Transformator-Ausgang die - vom Netz VN oder dem Wechselrichter WR1 bereits erzeugte - Spannung anliegt. Die Reglerausgangssignale sichern dann den gewünschten Stromfluß in die sichere Schiene, indem sie die Spannungen UL1', UL2' und UL3' um entsprechende, stromabhängige Zusatz-Sollwerte erhöhen:

$$UAB = UL1' + 2\Delta \, U(IL1) - \Delta U(IL2) - \Delta U(IL3)$$

$$UBC = UL2' + 2\Delta U(IL2) - \Delta U(IL1) - \Delta U(IL3).$$

Die dritte verkettete Spannung UCA = UAB - UBC kann wieder rechnerisch gebildet werden:

$$UCA = UL3' + 2\Delta U(IL3) - \Delta U(IL1) - \Delta U(IL2).$$

Wird somit für den stromlosen Fall ein (insbesondere symmetrisches) System UL1*, UL2* von Sollspannungen vorgegeben und soll dieses System auch im strombehafteten Fall am Wechselrichterausgang aufrechterhalten werden, so müssen hierzu die verketteten Ausgangsspannungen des Wechselrichters die stromabhängigen Spannungsabfälle in der Transformationseinrichtung kompensieren. In FIG 6 ist dazu vorgesehen, aus den Reglerausgangssignalen die Größen $\Delta UL1*$ und $\Delta UL2*$ zu bilden, bei denen ein Nullsystem eliminiert ist, und diese Ausgangssignale entsprechend den angegebenen Beziehungen als Zusatzsollwerte für die unterlagerte Spannungsregeleinrichtungen (hier die Regler RPU1 und RPI1 für UL1 und RPU2 und RPI2 für UL2) an den Additionsstellen AD4 und AD5 zu verwenden.

Ähnliche Beziehungen lassen sich dabei auch für kompliziertere Strukturen der Transformationseinrichtung ableiten.

Auf diese Weise ist es möglich, z.B. bei einer unterbrechungsfreien Stromversorgung oder bei anderen Anlagen mit einem parallel arbeitenden Wechselrichter selbst bei unsymmetrischer Last und/oder belastetem Null-Leiter ein praktisch symmetrisches Spannungssystem aufrecht zu erhalten, bei dem selbst bei dynamischen Änderungen ein Nullsystem weitgehend unterdrückt ist.

**Patentansprüche**

1. Verfahren zur Speisung eines dreiphasigen Drehspannungsnetzes mit einem belastbaren Null-Leiter, mit folgenden Merkmalen:
   - Aus den Ausgangssignalen der Spannungsregel-Einrichtungen werden drei Einzelspannungs-Steuersignale (UA*, UB*, UC*) gebildet und pulsbreitenmoduliert (FIG 4),
   - mit jedem der pulsbreitenmodulierten Einzelspannungs-Steuersignale wird jeweils ein Brückenzweigpaar eines dreiphasigen, pulsbreitengesteuerten Brükken-Pulswechselrichters (WR) gesteuert (FIG 1),
   - die Ausgangsspannungen der Brückenzweigpaare werden an drei Primäranschlüsse (A, B, C) einer Transformationseinrichtung (TE) gelegt, die nur sekundärseitig einen angeschlossenen Sternpunkt besitzt, an den der Null-Leiter (UN) des Drehspannungsnetzes angeschlossen ist und deren Sekundäranschlüsse (L1, L2, L3) mit den Phasen des Drehspannungsnetzes verbunden sind (FIG. 1), und

- im Regelkreis der Regeleinrichtungen (REA, REB) wird eine der Struktur der Transformationseinrichtung (TE) entsprechende Umrechnung (Y/$\Delta$) von sekundärseitigen Spannungen in primärseitige Spannungen vorgenommen (FIG 4),

gekennzeichnet durch folgende Merkmale:

- aus einem Betragssollwert und einem geregelten momentanen Phasenwinkelsollwert ($\int f^*.dt$) werden die Sollwerte eines symmetrischen Sollspannungssystems (UL*) gebildet (FIG4),

- die Phasendifferenz zwischen einem synchronisierenden Spannungssystem (Usyn) und dem symmetrischen Sollspannungssystem (UL*) wird gebildet und mittels der Phasendifferenz wird eine frequenzgesteuerte Oszillatoreinrichtung (UF, FW1, FW2) gesteuert, an der der geregelte momentane Phasenwinkelsollwert und die Sollwerte des symmetrischen Sollspannungssystems abgegriffen werden (FIG 4),

- jeweils ein Spannungssollwert des symmetrischen Sollspannungssystems (UL*) und ein aus Spannungsmeßwerten des Drehspannungsnetzes gebildeter Spannungsistwert eines

2. Verfahren nach Anspruch 1, **dadurch gekennzeichnet,** daß die Ausgangsspannungen der Brückenzweigpaare jeweils an einen der drei Primäranschlüsse der Transformationseinrichtung gelegt sind und Primärwicklungen von Einphasen-Transformatoren speisen, wobei die Primärwicklungen die Primäranschlüsse der Transformationseinrichtung verbinden und die Sekundärwicklungen der Einphasentransformatoren in Stern geschaltet sind.

3. Verfahren nach Anspruch 1, **dadurch gekennzeichnet,** daß als Betragssollwert ein dem Betrag des synchronisierenden Spannungssystems entsprechendes Signal gebildet wird.

4. Verfahren nach Anspruch 3, **dadurch gekennzeichnet,** daß des dem Betrag des synchronisierenden Spannungssystems entsprechende Signal (|Usyn|) dem Sollwerteingang eines Betragsreglers (BR) zugeführt wird, dessen Istwerteingang wahlweise ein dem Betrag des Drehspannungssystems entsprechendes Signal (|UL|) und das Ausgangssignal des Betragsreglers (BR) zugeführt ist.

5. Verfahren nach Anspruch 1, **dadurch gekennzeichnet,** daß der frequenzgesteuerten Oszillatoreinrichtung (UF, FW1, FW2) ein Steuersignal aufgeschaltet ist, das am Ausgang eines abschaltbaren Winkelreglers (FR) für die Phasendifferenz abgegriffen und bei abgeschaltetem Winkelregler (FR) von einem vorgegebenen Frequenzsollwert (fO) gebildet ist.

6. Verfahren nach der Kombination von Anspruch 4 und Anspruch 5, **dadurch gekennzeichnet,** daß

i) bei einer Störung im synchronisierenden Spannungssystem dem Sollwerteingang des Betragsreglers (BR) ein vorgegebener Wert (BO) für den Betragssollwert und dem Istwerteingang das den Betrag des Drehspannungssystems entsprechende Signal zugeführt wird und der Winkelregler abgeschaltet wird, und

ii) daß nach dem Ende der Störung dem Sollwerteingang des Betragsreglers das dem Betrag des synchronisierenden Spannungssystems entsprechende Signal (|Usyn|) und dem Istwert eingang des Betragsreglers das Ausgangssignal des Betragsreglers (BR) zugeführt wird und der Winkelregler (FR) freigegeben wird.

7. Verfahren nach Anspruch 1, **dadurch gekennzeichnet,** daß das synchronisierende System (Usyn) aus Spannungsmeßwerten gebildet wird, die an einem das Drehspannungsnetz speisenden Versorgungsnetz abgegriffen sind.

8. Verfahren nach Anspruch 1**, dadurch gekennzeichnet,** daß das Sollspannungssystem (UL*) und das Istspannungssystem (UL) jeweils durch zwei Signale beschrieben werden, und daß aus zwei Ausgangssignalen der Spannungs-Regeleinrichtungen die drei Einzelspannungs-Steuersignale so gebildet werden, daß deren Summe gleich Null ist.

9. Verfahren nach Anspruch 1, **dadurch gekennzeichnet,** daß an Querkondensatoren, die in der Transformationseinrichtung vorgesehen sind, ein Kondensatorstrom-Istwertsystem (IC1, IC2) gemessen wird, daß aus dem symmetrischen Sollspannungssystem (UL*) ein phasenverschobenes Kondensatorstrom-Sollwertsystem (IC1*, IC2*) gebildet wird und daß in der Spannungsregel-Einrichtung die Einzelspannungs-Steuersignale (UA*, UB*, UC*) dadurch gebildet werden, daß das System der Kondensatorstrom-Istwertsignale auf die Summe des Kondensatorstrom-Sollwertsystems und eines Zusatz-Sollwertsystems geregelt wird, wobei das Zusatz-Sollwertsystem aus den Regelabweichungen der Spannungssollwerte von den Spannungsistwerten gebildet wird.

10. Verfahren zur Speisung eines Drehspannungsnetzes mit einem belastbaren Null-Leiter, mit folgenden Merkmalen:

a) an Phasenanschlüssen (L1, L2, L3) des Drehspannungsnetzes wird jeweils ein Stromistwert-System der ins Drehspannungsnetz fließenden Ströme (IL1, IL2, IL3) gemessen und aus einem System (LI*) von Stromsollwerten ohne Nullsystem wird jeweils die Regelabweichung zwischen einem Stromsollwert und einem Istwert des Stromistwert-Systems gebildet,

b) aus jeder Regelabweichung wird mittels einer Stromregeleinrichtung (RSA, RSB) ein Stromsteuersignal gebildet,

c) aus den Stromsteuersignalen werden drei pulsbreitenmodulierte Einzelsteuersignale (UA*, UB*, UC*) gebildet,

d) mit jedem der pulsbreitenmodulierten Einzelsteuersignale wird jeweils ein Brückenzweigpaar eines dreiphasigen, pulsbreitengesteuerten Brückenpulswechselrichters gesteuert,

e) die Ausgangsspannungen der Brückenzweigpaare werden an drei Primäranschlüsse (A, B, C) einer Transformationseinrichtung (TE) gelegt, die nur sekundärseitig einen angeschlossenen Sternpunkt besitzt, an den der Null-Leiter (UN) des Drehspannungsnetzes angeschlossen ist und deren Sekundäranschlüsse (L1, L2, L3) mit den Phasen des Drehspannungsnetzes verbunden sind, und

f) im Regelkreis der Stromregel-Einrichtungen wird eine der Struktur der Transformationseinrichtung entsprechende Umrechnung (Y/$\Delta$) von sekundärseitigen Spannungen in primärseitige Spannungen vorgenommen.

11. Verfahren nach Anspruch 10, **dadurch gekennzeichnet,** daß das Stromsollwertsystem als Bruchteil eines Meßwertsystems gebildet wird, das den in den Phasen des Drehspannungsnetzes fließenden Strömen (IS) entspricht.

12. Verfahren nach Anspruch 10, **dadurch gekennzeichnet,** daß das System der StromsteuerSignale mit einem Spannungsmeßwert-System verglichen wird, dessen Spannungsmeßwerte an den Ausgängen der Transformationseinrichtung abgegriffen sind,

- daß die Regelabweichung jeweils eines Spannungs-Meßwertes von einem Stromsteuer-Signal gebildet und einer eigenen Spannungsregeleinrichtung zugeführt wird, und

- daß aus den Ausgangssignalen der Spannungsregel-Einrichtungen die pulsbreitenmodulierten Einzelsteuersignale gebildet werden, wobei die der Struktur der Transformationseinrichtung entsprechende Umrechnung (Y/$\Delta$) sowohl im Regelkreis der Spannungs-Regeleinrichtungen als auch im Regelkreis der Stromregel-Einrichtungen vorgenommen wird.

13. Verfahren nach Anspruch 12, **dadurch gekennzeichnet,** daß die der Struktur der Transformationseinrichtung entsprechende Umrechnung am Ausgang der Spannungsregel-Einrichtung vorgenommen wird.

14. Verfahren nach Anspruch 12, **dadurch gekennzeichnet,** daß den Eingängen der Spannungsregel-Einrichtungen ein auf die Spannungen des Drehspannungsnetzes synchronisiertes Sollspannungssystem ohne Nullsystem aufgeschaltet ist.

15. Verfahren nach Anspruch 14, **dadurch gekennzeichnet,** daß aus dem Stromsollwert-System und dem Stromistwert-System zwei ein symmetrisches System von Stromsteuersignalen bestimmende Spannungs-Zusatzsollwerte gebildet werden, daß das Spannungsmeßwert-System und das auf die Spannungen des Drehspannungsnetzes synchronisierte Sollspannungssystem jeweils durch zwei Spannungsistwerte und zwei Spannungssollwerte erfaßt wird, daß zwei Spannungsregel-Einrichtungen die Abweichung der Spannungsistwerte von der Summe aus einem Spannungssollwert und einem Spannungs-Zusatzsollwert zugeführt wird, und daß aus den Ausgangssignalen der Spannungsregel-Einrichtungen drei Signale gebildet werden, deren Summe Null ist und aus denen durch Pulsbreitenmodulation die Einzelsteuersignale gebildet werden.

16. Vorrichtung zur Speisung eines dreiphasigen Drehspannungsnetzes mit belastbarem Null-Leiter, mit folgenden Merkmalen:

a) Die drei Phasenleiter des Drehspannungsnetzes sind an drei Sekundäranschlüsse einer Transformationseinrichtung (TE) angeschlossen, deren sekundärer Sternpunkt mit dem Null-Leiter verbunden ist und die keinen primärseitig angeschlossenen primären Sternpunkt besitzt,

b) drei Primäranschlüsse der Transformationseinrichtung sind über drei Drehstromanschlüsse jeweils mit einem Brückenzweigpaar eines dreiphasigen Brücken-Pulswechselrichters angeschlossen,

c) an den Sekundäranschlüssen angeordnete Spannungsmeßgeber bilden ein System von Spannungsistwerten ohne Nullsystem,

d) für jeden Spannungsistwert ist eine Spannungsregeleinrichtung mit einem Sollwerteingang und einem Istwerteingang vorgesehen, wobei der Spannungsistwert dem Istwerteingang aufgeschaltet ist,

e) an die Ausgänge der Spannungsregeleinrichtungen sind drei Pulsbreitenmodulatoren (IPA, IPB, IPC) angeschlossen, die jeweils ein pulsbreitenmoduliertes Steuersignal für die steuerbaren Ventile der Brückenzweigpaare liefern,

f) im Regelkreis der Spannungsregeleinrichtung (REA, REB) ist eine Entflechtungseinrichtung (EF) vorgesehen, die entsprechend der Struktur der Transformationseinrichtung sekundärseitige Spannungen der Transformationseinrichtung in primärseitige Spannungen umrechnet,

dadurch gekennzeichnet, daß

g) eine Synchronisiereinrichtung mit einem Eingang für ein synchronisierendes Spannungssystem ($U_{syn}$) und Ausgängen für synchronisierte Spannungssollwerte eines Sollspannungssystem (UL*) ohne Nullsystem ist jeweils mit einem Ausgang für einen Sollwert am Sollwerteingang einer der Spannungsregeleinrichtungen (REA, REB) angeschlossen,

h) in der Synchronisiereinrichtung bildet ein Phasendifferenzdetektor die momentane Phasendifferenz ($\alpha$ -$\int$f*dt) zwischen dem synchronisierenden Spannungssystem ($U_{syn}$) und dem Sollspannungssystem (UL*),

i) die Phäsendifferenz ($\alpha$ -$\int$f*dt) steuert einen Winkelregler (FR) mit einer frequenzgesteuerten Oszillatoreinrichtung (UF, FW1, FW2), einem Betragssollwert-Eingang, dem ein Betragssollwert aufgeschaltet ist, und Ausgängen für die synchronisierten Spannungssollwerte, die sowohl den Sollwertausgängen der Synchronisiereinrichtung als auch dem Phasendifferenzdetektor zugeführt sind.

17. Vorrichtung nach Anspruch 16, **dadurch gekennzeichnet,** daß der Winkelregler (FR) abschaltbar und die Oszillatoreinrichtung bei abgeshaltetem Winkelregler von einem vorgegebenen Frequenzsollwert gesteuert ist und daß der Betragssollwert-Eingang mit dem Ausgang eines umschaltbaren Betragsreglers (BR) verbunden ist, wobei der Betragsregler (BR) bei abgeschaltetem Winkelregler (FR) einen aus einer Differenz gebildeten geregelten momentanen Betragssollwert und bei eingeschaltetem Winkelregler (FR) einen dem Betrag des synchronisierenden Spannungssystems entsprechenden Sollwert dem Betragssollwert-Eingang der Oszillatoreinrichtung zuführt, wobei die besagte Differenz aus der Regelabweichung eines dem Betrag des Spannungsistwert-Systems entsprechenden Signals von einem vorgegebenen Spannungssollwert (BO) gebildet ist.

18. Vorrichtung nach Anspruch 17, **dadurch gekennzeichnet,** daß das synchronisierende Spannungssystem von Meßgliedern für die Spannungen eines in das Drehspannungssystem parallel zum Brücken-Pulswechselrichter speisenden Netzes geliefert wird.

19. Vorrichtung nach Anspruch 16, **dadurch gekennzeichnet,** daß den Sollwerteingängen der Spannungsregeleinrichtungen jeweils ein Zusatz-Sollwert aufgeschaltet ist, der an Ausgängen einer Stromregeleinrichtung (RSA, RSB) abgegriffen ist, daß den Sollwerteingängen der Stromregeleinrichtungen ein System von Stromsollwerten (LI*) und ein System von Stromistwerten aufgeschaltet ist, wobei das System der Stromistwerte an Strommeßgliedern für die drei in den Sekundäranschlüssen der Transformationseinrichtung fließenden Ströme geliefert wird.

20. Vorrichtung nach Anspruch 19, **dadurch gekennzeichnet,** daß das synchronisierende Spannungssystem von Spannungsdetektoren an den Phasenleitern des Drehspannungsnetzes geliefert wird und dem Betragssollwert-Eingang der Oszillatoreinrichtung ein dem Betrag des synchronisierenden Spannungssystems entsprechendes Signal (|Usyn|) zugeführt ist.

21. Vorrichtung nach Anspruch 19, **gekennzeichnet** durch Stromdetektoren an den Phasenleitern des Drehspannungsnetzes, die als Stromsollwertsystem einen vorgegebenen Bruchteil der in den Phasenleitern des Drehspannungsnetzes fließenden Ströme bilden.

**22.** Vorrichtung nach Anspruch 16, **dadurch gekennzeichnet,** daß das System der Spannungssollwerte und Spannungsistwerte durch zwei Signale er faßt wird, die jeweils einer Spannungsregeleinrichtung zugeführt werden, und daß aus den Ausgangssignalen der beiden Spannungsregeleinrichtungen drei Einzelsteuersignale gebildet werden, deren Summe Null ist und die den, Pulsbreitenmodulatoren über die Entflechtungseinrichtung (EF) zugeführt werden.

**23.** Vorrichtung nach Anspruch 22, **dadurch gekennzeichnet,** daß die beiden Spannungsregeleinrichtungen jeweils einen Spannungsregler und einen nachgeschalteten Stromregler enthalten, und daß den Eingängen der Stromregler jeweils eine Regelabweichung zugeführt wird, deren Sollwert unter Phasenverschiebung aus dem Spannungssollwertsystem und deren Istwerte durch Messung der durch Querkondensatoren in der Transformationseinrichtung fließenden Ströme gebildet werden.

**24.** Vorrichtung nach Anspruch 23, **dadurch gekennzeichnet,** daß den Ausgängen der Spannungsregeleinrichtungen Vorsteuersignale aufgeschaltet werden, die unter Verdreifachung der Frequenz aus dem Spannungssollwert gebildet sind.

**25.** Vorrichtung nach Anspruch 18, **dadurch gekennzeichnet,** daß den Eingängen der Pulsbreitenmodulatoren die Ausgangssignale von Gleichanteils-Reglern aufgeschaltet werden, denen jeweils der Mittelwert der Ausgangsspannungen der Brückenzweigpaare aufgeschaltet sind.

## Claims

**1.** A method for feeding a three-phase voltage system having a load-carrying neutral conductor, with the following features:
- three individual voltage control signals (UA*, UB*, UC*) are formed and pulse width-modulated from the output signals of the voltage control devices (Figure 4),
- each bridge-arm pair of a three-phase, pulse width-controlled bridge pulse inverter (WR) is controlled by one of the pulse width-modulated individual voltage control signals (Figure 1),
- the output voltages of the bridge-arm pairs are connected to three primary terminals (A,B,C) of a transformation device (TE), which has a connected star point only on the secondary side, to which is connected the neutral conductor (UN) of the three-phase voltage system and the secondary terminals (L1, L2, L3) of which are coupled to the phases of the three-phase voltage system (Figure 1), and
- a conversion (Y/Δ) of secondary voltages into primary voltages, corresponding to the structure of the transformation device (TE), is carried out in the control loop of the control devices (REA,REB) (Figure 4)

characterised by the following features:
- the desired values of a symmetrical desired voltage system (UL*) are formed from a desired magnitude value and a controlled instantaneous phase-angle desired value ($\int f^*.dt$) (Figure 4),
- the phase difference between a synchronising voltage system (Usyn) and the symmetrical desired voltage system (UL*) is formed and, by means of the phase difference, a frequency-controlled oscillator device (UF, FW1, FW2) is controlled, at which the controlled instantaneous desired phase-angle value and the desired values of the symmetrical desired voltage system are tapped (Figure 4),
- one desired voltage value of the symmetrical desired voltage system (UL*) and one actual voltage value of an actual voltage system (UL), formed from measured voltage values of the three-phase voltage system, is supplied in each case to a separate voltage control device (REA, REB) (Figure 4).

**2.** A method according to claim 1, characterised in that the output voltages of the bridge-arm pairs are connected in each case to one of the three primary terminals of the transformation device and feed primary windings of single-phase transformers, the primary windings coupling the primary terminals of the transformation device and the secondary windings of the single-phase transformers being star-connected.

**3.** A method according to claim 1, characterised in that a signal corresponding to the magnitude of the synchronising voltage system is formed as the desired magnitude value.

**4.** A method according to claim 3, characterised in that the signal (|Usyn|) corresponding to the magnitude of the synchronising voltage system is supplied to the desired value input of a magnitude controller (BR), the actual value input of which is supplied as desired with a signal ($|UL|$) corresponding to the magnitude of the three-phase voltage system and the output signal of the magnitude controller (BR).

5. A method according to claim 1, characterised in that a control signal is applied to the frequency-controlled oscillator device (UF, FW1, FW2), which signal is tapped at the output of a disconnectable angle controller (FR) for the phase difference and is formed by a preset desired frequency value (fO) when the angle controller (FR) is disconnected.

6. A method according to a combination of claim 4 and claim 5, characterized in that
   i) when there is a fault in the synchronising voltage system a preset value (BO) for the desired magnitude value is supplied to the desired value input of the magnitude controller (BR) and the signal corresponding to the magnitude of the three-phase voltage system is supplied to the actual value input and the angle controller is disconnected, and
   ii) when the fault discontinues the signal ($|Usyn|$) corresponding to the magnitude of the synchronising voltage system is supplied to the desired value input of the magnitude controller and the output signal of the magnitude controller (BR) is supplied to the actual value of the magnitude controller and the angle controller (FR) is enabled.

7. A method according to claim 1, characterized in that the synchronising system (Usyn) is formed from measured voltage values which are tapped at a supply network feeding the three-phase voltage system.

8. A method according to claim 1, characterized in that the desired voltage system (UL*) and the actual voltage system (UL) are described in each case by two signals, and in that the three individual voltage control signals are formed from two output signals of the voltage control devices such that the sum thereof is equal to zero.

9. A method according to claim 1, characterized in that a capacitor current-actual value system (IC1, IC2) is measured at parallel capacitors which are provided in the transformation device, in that a phase-displaced capacitor current-desired value system (IC1*, IC2*) is formed from the symmetrical desired voltage system (UL*), and in that the individual voltage control signals (UA*, UB*, UC*) are formed in the voltage control device in that the system of the capacitor current-actual value signals is adjusted to the sum of the capacitor current-desired value system and of a supplementary desired value system, the supplementary desired value system being formed from the system deviations of the desired voltage values from the actual voltage values.

10. A method for feeding a three-phase voltage system having a load-carrying neutral conductor, with the following features:
   a) an actual current value system of the currents (IL1, IL2, IL3) flowing into the three-phase voltage system is measured in each case at phase terminals (L1, L2, L3) of the three-phase voltage system and the system deviation between a desired current value and an actual value of the actual current value system is formed in each case from a system (LI*) of desired current values without a zero phase-sequence system,
   b) a current control signal is formed from each system deviation by means of a current control device (RSA, RSB),
   c) three pulse width-modulated individual control signals (UA*, UB*, UC*) are formed from the current control signals,
   d) each bridge-arm pair of a three-phase, pulse width-controlled bridge pulse inverter is controlled by one of the pulse width-modulated individual control signals,
   e) the output voltages of the bridge-arm pairs are connected to three primary terminals (A,B,C) of a transformation device (TE), which has a connected star point only on the secondary side, to which is connected the neutral conductor (UN) of the three-phase voltage system and the secondary terminals (L1,L2,L3) of which are coupled to the phases of the three-phase voltage system and
   f) a conversion (Y/Δ) of secondary voltages into primary voltages, corresponding to the structure of the transformation device, is carried out in the control loop of the current control devices.

11. A method according to claim 10, characterized in that the desired current value system is formed as a part of a measured value system which corresponds to the currents (IS) flowing in the phases of the three-phase voltage system.

12. A method according to claim 10, characterized in that the system of the current control signals is compared with a measured voltage value system, the measured voltage values of which are tapped at the outputs of the transformation device,

- in that the system deviation of one measured voltage value is formed in each case by a current control signal and supplied to a separate voltage control device and
- in that the pulse width-modulated individual control signals are formed from the output signals of the voltage control devices, the conversion (Y/Δ) corresponding to the structure of the transformation device being carried out in the control loop of the voltage control devices as well as in the control loop of the current control devices.

13. A method according to claim 12, characterized in that the conversion corresponding to the structure of the transformation device is carried out at the output of the voltage control device.

14. A method according to claim 12, characterized in that a desired voltage system without a zero phase-sequence system, synchronized with the voltages of the three-phase voltage system, is applied to the inputs of the voltage control devices.

15. A method according to claim 14, characterised in that two supplementary desired voltage values determining a symmetrical system of current control signals are formed from the desired current value system and the actual current value system, in that the measured voltage value system and the desired voltage system synchronized with the voltages of the three-phase voltage system are sensed in each case through two actual voltage values and two desired voltage values, in that two voltage control devices are supplied with the deviation of the actual voltage values from the sum of a desired voltage value and a supplementary desired voltage value, and in that three signals are formed from the output signals of the voltage control devices, the sum of which is zero and from which the individual control signals are formed by pulse-width modulation.

16. A device for feeding a three-phase voltage system having a load-carrying neutral conductor, with the following features:

a) the three phase conductors of the three-phase voltage system are connected to three secondary terminals of a transformation device (TE), the secondary star point of which is coupled to the neutral conductor and which has no primary connected primary star point,

b) three primary terminals of the transformation device are connected by way of three three-phase current terminals in each case to a bridge-arm pair of a three-phase bridge pulse inverter.

c) voltage sensors arranged at the secondary terminals form a system of actual voltage values without a zero phase-sequence system,

d) a voltage control device with a desired value input and an actual value input is provided for each actual voltage value, the actual voltage value being applied to the actual value input,

e) three pulse-width modulators (IPA, IPB, IPC) are connected to the outputs of the voltage control devices, said pulse-width modulators delivering in each case a pulse width-modulated control signal for the controllable valves of the bridge-arm pairs,

f) a breakdown device (EF) is provided in the control loop of the voltage control device (REA,REB) which, corresponding to the structure of the transformation device, converts secondary voltages of the transformation device into primary voltages, characterized in that

g) a synchronising device with an input for a synchronising voltage system ($U_{syn}$) and outputs for synchronised desired voltage values of a desired voltage system (UL*) without a zero phase-sequence system is connected in each case to an output for a desired value at the desired value input of one of the voltage control devices (REA,REB),

h) a phase difference detector forms the instantaneous phase difference ($\alpha-\int f^*dt$) between the synchronising voltage system ($U_{syn}$) and the desired voltage system (UL*) in the synchronising device,

i) the phase difference ($\alpha-\int f^*dt$) controls an angle controller (FR) with a frequency-controlled oscillator device (UF,FW1,FW2), a desired magnitude value input, to which there is applied a desired magnitude value, and outputs for the synchronized desired voltage values, which are supplied to the desired value outputs of the synchronising device as well as to the phase difference detector.

17. A device according to claim 16, characterized in that the angle controller (FR) is disconnectable and the oscillator device is controlled by a preset desired frequency value when the angle controller is disconnected, and in that the desired magnitude value input is coupled to the output of a switchable magnitude controller (BR), wherein when the angle controller (FR) is disconnected the magnitude controller (BR) supplies a controlled instantaneous desired magnitude value formed from a difference and when the angle controller (FR) is connected it supplies a desired value corresponding to the magnitude of the synchronising voltage system to the desired magnitude value input of the oscillator device, wherein said difference is formed from the system deviation of a signal corresponding to the magnitude of the actual voltage value system from a prezet desired voltage value (BO).

18. A device according to claim 17, characterized in that the synchronising voltage system is delivered by measuring elements for the voltages of a system feeding into the three-phase voltage system parallel to the bridge pulse inverter.

19. A device according to claim 16, characterised in that a supplementary desired value is applied to each of the desired value inputs of the voltage control devices, said value being tapped at the outputs of a current control device (RSA,RSB), in that a system of desired current values (LI*) and a system of actual current values is applied to the desired value inputs of the current control devices, the system of the actual current values being delivered to the current measuring elements for the three currents flowing in the secondary terminals of the transformation device.

20. A device according to claim 19, characterized in that the synchronising voltage system of voltage detectors is delivered at the phase conductors of the three-phase voltage system and a signal (|Usyn[) corresponding to the magnitude of the synchronising voltage system is supplied to the desired magnitude value input of the oscillator device.

21. A device according to claim 19, characterized by current detectors at the phase conductors of the three-phase voltage system, which, as the desired current value system, form a preset fraction of the currents flowing in the phase conductors of the three-phase voltage system.

22. A device according to claim 16, characterized in that the system of the desired voltage values and actual voltage values is sensed by two signals, which are supplied in each case to a voltage control device, and in that three individual control signals are formed from the output signals of the two voltage control devices, the sum of which signals is zero and which signals are supplied to the pulse-width modulators by way of the breakdown device (EF).

23. A device according to claim 22, characterized in that the two voltage control devices comprise in each case a voltage controller and a subsequently connected current controller and in that a system deviation is supplied in each case to the inputs of the current controllers, the desired value of which is formed, with phase displacement, from the desired voltage value system and the actual values of which are formed by measuring the currents flowing through parallel capacitors in the transformation device.

24. A device according to claim 23, characterized in that pre-control signals are applied to the outputs of the voltage control devices which are formed from the desired voltage value by trebling the frequency.

25. A device according to claim 18, characterized in that the output signals of directcomponent controllers are applied to the inputs of the pulse-width modulators, the average value of the output voltages of the bridge-arm pairs being applied in each case to said output signals.

**Revendications**

1. Procédé pour alimenter un réseau triphasé comportant un conducteur neutre Pouvant être chargé, présentant les caractéristiques suivantes :
   - trois signaux de commande de tensions individuelles (UA*, UB*, UC*) sont formés à Partir des signaux de sortie des dispositifs de régulation de tension et sont soumis à une modulation d'impulsions en durée (figure 4),
   - respectivement un couple de branches d'un onduleur à impulsions en pont triphasé (W), dont les durées des impulsions sont commandées, est commandé (figure 1) avec chacun des signaux de commande de tensions impulsionnelles, modulés selon une modulation d'impulsions en durée,

- les tensions de sortie des couples de branches du pont sont raccordées à trois bornes primaires (A, B, C) d'un dispositif de transformation (TE), qui possède seulement sur le côté secondaire un neutre raccordé, auquel est raccordé le conducteur neutre (UN) du réseau triphasé et dont les bornes secondaires (L1, L2, L3) sont connectées aux phases du réseau triphasé (figure 1), et
- dans le circuit de régulation des dispositifs de régulation (REA, REB) est exécuté une conversion (Y/Δ), qui correspond à la structure du dispositif de transformation (TE), de tensions présentes côté secondaire en tensions présentes côté primaire (figure 4), caractérisé par les particularités suivantes :
- les valeurs de consigne d'un système symétrique de tensions de consigne (UL*) sont formées (figure 4) à partir d'une valeur absolue de consigne et d'une valeur de consigne instantanée réglée de l'angle de phase ($\int$ f*.dt),
- la différence de phase entre un système de tension de synchronisation (Usyn) et le système symétrique de tensions de consigne (UL*) est formée et cette différence de phase commande un dispositif oscillateur (UF, FW1, FW2), dont la fréquence est commandée et sur lequel sont prélevées la valeur de consigne instantanée réglée de l'angle de phase et les valeurs de consigne du système symétrique de tensions de consigne (figure 4),
- respectivement une valeur de consigne de tension du système symétrique de tensions de consigne (UL*) et une valeur réelle de tension, formée à partir des valeurs de mesure de tension du réseau triphasé, d'un système de tension réelle (UL), sont envoyées (figure 4) à un dispositif particulier de régulation de tension (REA, REB).

2. Procédé suivant la revendication 1, caractérisé par le fait que les tensions de sortie des couples de branches du pont sont appliquées respectivement à l'une des trois bornes primaires du dispositif de transformation et alimentent des enroulements primaires de transformateurs monophasés, les enroulements primaires reliant les bornes primaires du dispositif de transformation, tandis que les enroulements secondaires des transformateurs monophasés sont branchés en étoile.

3. Procédé suivant la revendication 1, caractérisé par le fait qu'un signal correspondant à la valeur absolue du système de tension de zynchronization est formé en tant que valeur absolue de consigne.

4. Procédé suivant la revendication 3, caractérisé par le fait que le signal (|Usyn|), qui correspond à la valeur absolue du système de tension de synchronisation, est envoyé à l'entrée de la valeur de consigne d'un régulateur (BR) de la valeur absolue, à l'entrée de la valeur réelle duquel est envoyé au choix un signal (|UL|) qui correspond à la valeur absolue du système de tension triphasé, ou le signal de sortie du régulateur (BR) de la valeur absolue.

5. Procédé suivant la revendication 1, caractérisé par le fait qu'au dispositif oscillateur (UF, FW1, FW2) dont la fréquence est commandée, est appliqué un signal de commande qui est prélevé sur la sortie d'un régulateur angulaire débranchable (FR) pour la différence de phase et, dans le cas où le régulateur angulaire (FR) est débranché, est formé par une valeur de consigne prédéterminée (f0) de la fréquence.

6. Procédé selon la combinaison de la revendication 4 et de la revendication 5, caractérisé en ce que

i) dans le cas d'une perturbation dans le système de tension de synchronization, une valeur prédéterminée (B0) pour la valeur absolue de consigne est envoyée à l'entrée de la valeur de consigne du régulateur (BR) de la valeur absolue, et le signal, qui correspond à la valeur absolue du système de tension triphasé, est envoyé à l'entrée de la valeur réelle, et le régulateur angulaire est débranché, et

ii) à la fin de la perturbation, le signal (|Usyn|), qui correspond à la valeur absolue du système de tension de synchronisation, est envoyé à l'entrée de la valeur de consigne du régulateur de la valeur absolue et le signal de sortie du régulateur (BR) de la valeur absolue est envoyé à l'entrée de la valeur réelle du régulateur de la valeur absolue et le régulateur angulaire (FR) est libéré.

7. Procédé suivant la revendication 1, caractérisé par le fait que le système de synchronisation (Usyn) est formé par des valeurs de mesure de tension, qui sont prélevées dans un réseau d'alimentation alimentant le réseau triphasé.

**8.** Procédé suivant la revendication 1, caractérisé par le fait que le système de tension de consigne (UL*) et le système de tension réelle (UL) sont décrits respectivement par deux signaux, et que les trois signaux de commande de tensions individuelles sont formés à partir de deux signaux de sortie des dispositifs de régulation de tension de sorte que la somme de ces signaux de commande est nulle.

**9.** Procédé suivant la revendication 1, caractérisé par le fait qu'un système de valeurs réelles de courants de condensateurs (IC1, IC2) est mesuré au niveau de condensateurs transversaux qui sont prévus dans le dispositif de transformation, qu'un système déphasé de valeurs de consigne de courants de condensateurs (IC1*, IC2*) est formé à partir du système symétrique de tension de consigne (UL*) et que les signaux de commande de tensions individuelles (UA*, UB*, UC*) sont formés dans le dispositif de régulation de tension par le fait que le système des signaux de valeurs réelles des courants de condensateurs est réglé sur la somme du système de valeurs de consigne des courants de condensateurs et d'un système de valeurs de consigne supplémentaire, le système de valeurs de consigne supplémentaire étant formé à partir des écarts de régulation entre les valeurs de consigne de tension et les valeurs réelles de tension.

**10.** Procédé pour alimenter un réseau triphasé comportant un conducteur neutre pouvant être chargé, présentant les caractéristiques suivantes :
   a) respectivement un système de valeurs réelles des courants (IL1, IL2, IL3) circulant dans le réseau triphasé est mesuré au niveau des bornes de phase (L1, L2, L3) du réseau triphasé, et respectivement l'écart de régulation entre une valeur de consigne de courant et une valeur réelle du système de valeurs réelles des courants est formé à partir d'un système (LI*) de valeurs de consigne de courants sans système nul,
   b) un signal de commande de courant est formé à partir de chaque écart de régulation, au moyen d'un dispositif de régulation de courant (RS1, RS2),
   c) trois signaux de commande individuels (UA*, UB*, UC*) modulés selon une modulation d'impulsions en durée sont formés à partir des signaux de commande de courant,
   d) respectivement un couple de branches d'un onduleur à impulsions en pont triphasé, dont les durées d'impulsions sont commandées, est commandé par chacun des signaux de commande individuels modulés selon une modulation d'impulsions en durée,
   e) les tensions de sortie des couples de branches du pont sont appliquées aux trois bornes primaires (A, B, C) d'un dispositif de transformation (TE) qui possède uniquement sur le côté secondaire un neutre raccordé, auquel est connecté le conducteur neutre (UN) du réseau triphasé et dont les bornes secondaires (L1, L2, L3) sont connectées aux phases du réseau triphasé, et
   f) dans le circuit de régulation des dispositifs de régulation est réalisée une conversion (Y/Δ), qui correspond à la structure du dispositif de transformation, de tensions présentes côté secondaire en des tensions présentes côté primaire.

**11.** Procédé suivant la revendication 10, caractérisé par le fait que le système de valeurs de consigne des courants est formé en tant que fraction d'un système de valeurs de mesure, qui correspond aux courants (IS) qui circulent dans les phases du réseau triphasé.

**12.** Procédé suivant la revendication 10, caractérisé par le fait que le système des signaux de commande des courants est comparé à un système de valeurs de mesure de tension, dont les valeurs de mesure de tension sont prélevées sur les sorties du dispositif de transformation,
   - que l'écart de régulation est formé entre respectivement une valeur de mesure de tension et un signal de commande de courant et est envoyé à un dispositif particulier de régulation de tension, et
   - que les signaux de commande individuels, qui sont modulés selon une modulation d'impulsions en durée, sont formés à partir des signaux de sortie des dispositifs de régulation de tension, la conversion (Y/Δ), qui correspond à la structure du dispositif de transformation, étant réalisée aussi bien dans le circuit de régulation des dispositifs de régulation de tension que dans le circuit de régulation des dispositifs de régulation de courant.

**13.** Procédé suivant la revendication 12, caractérisé par le fait que la conversion, qui correspond à la structure du dispositif de transformation, est réalisée à la sortie du dispositif de régulation de tension.

**14.** Procédé suivant la revendication 12, caractérisé par le fait qu'un système de tensions de consigne, qui est synchronisé sur les tensions du réseau triphasé, sans système nul, est appliqué aux entrées des dispositifs de régulation de tension.

**15.** Procédé suivant la revendication 14, caractérisé par le fait que deux valeurs de consigne supplémentaires de tension, qui déterminent un système symétrique de signaux de commande de courant, sont formées à partir du système de valeurs de consigne des courants et du système des valeurs réelles de courant, que le système de valeurs de mesure de tension et le système de tensions de consigne, qui est synchronisé sur les tensions du réseau triphasé, sont détectés respectivement au moyen de deux valeurs réelles de tension et de deux valeurs de consigne de tension, que l'écart entre les valeurs réelles de tension et la somme formée à partir d'une valeur de consigne de tension est une valeur de consigne supplémentaire de tension est envoyé à deux dispositifs de régulation de tension, et qu'à partir des signaux de sortie des dispositifs de régulation de tension sont formés trois signaux, dont la somme est nulle et à partir desquels les signaux de commande individuels sont formés au moyen d'une modulation d'impulsions en durée.

**16.** Dispositif pour alimenter un réseau triphasé comportant un conducteur neutre pouvant être chargé, présentant les particularités suivantes

a) les trois conducteurs de phase du réseau triphasé sont raccordés à trois bornes secondaires d'un dispositif de transformation (TE), dont le neutre secondaire est raccordé au conducteur neutre et qui ne comporte aucun neutre primaire raccordé sur le côté primaire,

b) trois bornes primaires du dispositif de transformation sont raccordées, par l'intermédiaire de trois bornes à courant triphasé, respectivement à un couple de branches d'un onduleur à impulsions en pont triphasé,

c) des transmetteurs de mesure de tension montés sur les bornes secondaires, forment un système de valeurs réelles de tension sans système nul,

d) pour chaque valeur réelle de tension il est prévu un dispositif de régulation de tension comportant une entrée pour la valeur de consigne et une entrée pour la valeur réelle, la valeur réelle de tension étant appliquée à l'entrée de la valeur réelle,

e) aux sorties des dispositifs de régulation de tension sont raccordés trois modulateurs d'impulsions en durée (IPA, IPB, IPC) qui délivrent respectivement un signal de commande modulé selon une modulation d'impulsions en durée pour les valves commandables des couples de branches du pont,

f) dans le circuit de régulation du dispositif de régulation de tension (REA, REB) est prévu un dispositif de désimbrication (EF) qui convertit, en fonction de la structure du dispositif de transformation, des tensions situées côté secondaire du dispositif de transformation en des tensions situées côté primaire, caractérisé par le fait que

g) un dispositif de synchronisation comportant une entrée pour un système de tension de synchronisation ($U_{syn}$) et des sorties pour des valeurs de consigne de tension synchronisées d'un système de tensions de consigne (UL*) sans système nul, est raccordé, respectivement par une sortie pour une valeur de consigne, à l'entrée de la valeur de consigne de l'un des dispositifs de régulation de tension (REA, REB),

h) dans le dispositif de synchronisation, un détecteur de différence de phase forme la différence de phase instantanée ($\alpha-\int f^* dt$) entre le système de tension de synchronisation ($U_{syn}$) et le système de tensions de consigne (UL*),

i) la différence de phase ($\alpha-\int f^* dt$) commande un régulateur angulaire (FR) comportant un dispositif oscillateur (UF, FW1, FW2), dont la fréquence est commandée, une entrée de la valeur de consigne absolue, à laquelle est appliquée une valeur de consigne absolue, et des sorties pour les valeurs de consigne de tension synchronisées, qui sont envoyées aussi bien aux sorties des valeurs de consigne du dispositif de synchronisation qu'au détecteur de différence de phase.

**17.** Dispositif suivant la revendication 16, caractérisé par le fait que le régulateur angulaire (FR) peut être déconnecté et que lorsque le régulateur angulaire est déconnecté, le dispositif oscillateur est commandé par une valeur de consigne de fréquence prédéterminée et que l'entrée de la valeur absolue de consigne est reliée à la sortie d'un régulateur commutable (BR) de la valeur de consigne, que, lorsque le régulateur angulaire (FR) est connecté, le régulateur (BR) de la valeur de consigne envoie une valeur absolue de consigne instantanée réglée, formée à partir d'une différence, et, dans le cas où le régulateur angulaire (FR) est connecté, envoie une valeur de consigne qui correspond à la valeur absolue du système de tension de synchronisation, à l'entrée de la valeur absolue de consigne du dispositif oscillateur, ladite différence étant formée à partir de l'écart de régulation entre un signal, qui correspond à la valeur absolue du système de la valeur réelle de tension, et la valeur de consigne de tension prédéterminée (BO).

18. Dispositif suivant la revendication 17, caractérisé par le fait que le système de tension de synchronisation est délivré par des circuits de mesure pour les tensions d'un réseau qui, dans le système de tension triphasé, réalise une alimentation en parallèle avec l'onduleur impulsionnel en pont.

19. Dispositif suivant la revendication 16, caractérisé par le fait qu'aux entrées des valeurs de consigne des dispositifs de régulation de tension sont appliquées respectivement des valeurs de consigne supplémentaires, qui sont prélevées sur les sorties d'un dispositif de régulation de courant (RSA, RSB), qu'un système de valeurs de consigne de courant (LI*) et un système de valeurs réelles de courant sont appliqués aux entrées des valeurs de consigne des dispositifs de régulation de courant, le système des valeurs réelles de courant étant délivré à des circuits de mesure de courant pour les trois courants qui circulent dans les bornes secondaires du dispositif de transformation.

20. Dispositif suivant la revendication 19, caractérisé par le fait que le système de tension de synchronisation est délivré par des détecteurs de tension aux conducteurs de phase du réseau triphasé et qu'un signal (|Usyn|), qui correspond à la valeur absolue du système de tension de synchronisation, est envoyé à l'entrée de la valeur absolue de consigne du dispositif oscillateur.

21. Dispositif suivant la revendication 19, caractérisé par des détecteurs de courant branchés dans les conducteurs de phase du réseau de tension triphasé, qui forment, en tant que système de valeurs de consigne de courant, une fraction prédéterminée des courants circulant dans les conducteurs de phase du réseau triphasé.

22. Dispositif suivant la revendication 16, caractérisé par le fait que le système des valeurs de consigne de tension et des valeurs réelles de tension sont détectés par deux signaux qui sont envoyés respectivement à un dispositif de régulation de tension, et qu'à partir des signaux de sortie des deux dispositifs de régulation de tension sont formés trois signaux de commande individuels, dont la somme est nulle et qui sont envoyés aux modulateurs d'impulsions en durée par l'intermédiaire du dispositif de désimbrication (EF).

23. Dispositif suivant la revendication 22, caractérisé par le fait que les deux dispositifs de régulation de tension contiennent chacun un régulateur de tension et un régulateur de courant branché en aval, et qu'aux entrées des régulateurs de courant est envoyé respectivement un écart de régulation, dont la valeur de consigne est formée moyennant un déphasage à partir du système de valeurs de consigne de tension et dont les valeurs réelles sont formées par mesure des courants circulant dans des condensateurs transversaux situés dans le dispositif de transformation.

24. Dispositif suivant la revendication 23, caractérisé par le fait qu'aux sorties des dispositifs de régulation de tension sont appliqués des signaux de commande pilote, qui sont formés moyennant un triplement de la fréquence, à partir de la valeur de consigne de tension.

25. Dispositif suivant la revendication 18, caractérisé par le fait qu'aux entrées des modulateurs d'impulsions en durée sont appliqués les signaux de sortie de régulateurs des composantes continues, auxquels sont appliquées respectivement la valeur moyenne des tensions de sortie des couples de branches du pont.

**FIG 1**

FIG 2

EP 0 419 690 B1

FIG 3

22

FIG 4

**FIG 5**

**FIG 6**

24